# EUROPEAN PATENT APPLICATION

(11) **EP 4 781 878 A1**
(43) Date of publication of application: **29.07.2026**
(21) Application number: 25153389.9
(22) Date of filing: 22.01.2025
(51) Int. Cl.: A47J 37/07

(54) **BARBECUE APPLIANCE WITH ADJUSTABLE SLOW COOKING CHAMBER**

(71) Applicant: Vestjens, Bart J.F.M., 5768 RV Meijel (NL)
(72) Inventor: Vestjens, Bart J.F.M., 5768 RV Meijel (NL)
(74) Representative: Winger

(57) **Abstract**

A barbecue appliance comprising: a grilling and/or griddling section; a slow cooking chamber; a fire pit for, in use, simultaneously supplying heat to both the grilling and/or griddling section and the slow cooking chamber; wherein the slow cooking chamber is adjustable in position relative to the fire pit to control its temperature.

## Description

### Field of the invention

The present invention relates to the field of barbecue appliances, and more specifically to barbecue appliances with both fast cooking, such as grilling or griddling, and slow cooking functions

### Background of the invention

Grilling is a popular method of outdoor cooking that has been enjoyed by people worldwide for generations. It involves cooking food over an open flame or heat source, imparting a unique flavour and experience that is distinct from indoor cooking methods. Over time, various types of barbecue appliances have been developed to cater to different culinary preferences and techniques, such as grilling, smoking, and baking. Combination barbecues, also known as dual-function barbecues, have been introduced to provide versatility by incorporating multiple cooking functions into a single appliance. These appliances enable users to explore a wider range of cooking styles without the need for multiple separate devices.

Despite the convenience offered by combination barbecues, there are challenges associated with managing different cooking processes simultaneously. One common issue is the difficulty in controlling and balancing the temperatures required for different cooking methods when using a single heat source. For instance, grilling and griddling typically requires high temperatures for searing and fast cooking, while slow cooking demands lower, steady temperatures over an extended period. Achieving precise temperature regulation for both functions at the same time can be complex and may lead to inconsistent cooking results.

Another challenge lies in the accessibility and handling of food items during the cooking process. When multiple cooking chambers or areas are in close proximity to the heat source, it can be cumbersome and unsafe to manage the food, particularly in slow cooking sections that may be positioned over or near intense heat. This can hinder the ability to marinate, turn, or remove food items without interrupting the cooking process or risking injury.

Additionally, maintaining consistent temperatures in different cooking zones can be problematic due to heat transfer and environmental factors. Fluctuations in temperature can affect the quality of the food being prepared, especially in slow cooking, where steady heat is essential for proper cooking. There may also be practical limitations in adjusting cooking chambers to optimize cooking conditions without disrupting the overall functionality of the appliance.

There is still a need for further advancements in the field to address at least some of the above challenges.

### Summary of the invention

It is an object of embodiments of the present invention to provide a barbecue appliance that enables simultaneous grilling and/or griddling and slow cooking functions with a single heat source. This objective is accomplished by the aspects of the present invention.

In a first aspect, the present invention relates to a barbecue appliance comprising a grilling and/or griddling section, a slow cooking chamber, and a fire pit for, in use, simultaneously supplying heat to both the grilling and/or griddling section and the slow cooking chamber, wherein the slow cooking chamber is adjustable in position relative to the fire pit to control its temperature.

In embodiments, the grilling and/or griddling section may comprise a grilling section comprising a grill grate. Alternatively or simultaneously, the grilling and/or griddling section may comprise a griddling section comprising a baking plate (the griddle). A grill grate and a baking plate are standard components for grilling and/or griddling food.

In embodiments, the slow cooking chamber may be vertically adjustable relative to the fire pit. This allows for precise temperature control of the slow cooking chamber.

In embodiments, the slow cooking chamber may be laterally movable relative to the fire pit. This facilitates handling of the food in the slow cooking chamber, such as marinating, turning, or removing the food. The lateral moving avoids that the user is troubled or gets injured by the heat of the grilling and/or griddling section while manipulating food in the slow cooking chamber.

In embodiments, the barbecue appliance may further comprise an arm hingedly connected to the slow cooking chamber. The arm may form a hinged connection between the slow cooking chamber and the grilling and/or griddling section. Alternatively, the arm may form a hinged connection between the slow cooking chamber and a frame installed on, around, on in relation to the grilling and/or griddling section. The hinged arm provides a convenient mechanism for adjusting the position of the slow cooking chamber, both in vertical and lateral direction.

In embodiments, the arm may be configured to allow vertical adjustment and lateral movement of the slow cooking chamber. This enables both temperature control and easy access to the food.

In embodiments, the arm may be telescopic to allow vertical adjustment of the slow cooking chamber. A telescopic arm provides a compact and adjustable support for the slow cooking chamber.

In embodiments, the arm may be rotatable about a vertical axis to allow lateral movement of the slow cooking chamber. Rotation of the arm enables the slow cooking chamber to be swivelled away from the fire pit for easy access.

In embodiments, the slow cooking chamber may be thermally insulated. Insulation helps maintain a consistent temperature in the slow cooking chamber.

In embodiments, the slow cooking chamber may be positionable above the centre of the fire pit when in use. Placing the slow cooking chamber at the centre of the fire pit ensures optimal heat transfer.

In embodiments, the barbecue appliance may further comprise a mechanism for infinitely variable adjustment of the slow cooking chamber's position relative to the fire pit. This allows for fine-tuning of the cooking temperature.

In embodiments, the fire pit may be a fire ring. A fire ring provides even heat distribution to both the grilling and/or griddling section and the slow cooking chamber. In embodiments of the present invention, the grilling and/or griddling section may be arranged around the fire pit, for instance the grilling and/or griddling section may be a fire ring barbecue. This configuration provides a compact and efficient barbecue appliance. In embodiments, the fire ring may define a central opening, and the slow cooking chamber may be positionable over the central opening. This configuration optimizes heat transfer to the slow cooking chamber.

In embodiments, the slow cooking chamber may be movable between a cooking position over the fire pit and a handling position laterally offset from the fire pit. The handling position allows for convenient manipulation of the food.

In embodiments, the slow cooking chamber may be provided with a lid. Such lid allows for closing the chamber, thus optimizing the cooking temperature.

In embodiments, the slow cooking chamber may be removably mountable on the barbecue appliance. This enables the slow cooking chamber to be easily cleaned or stored when not in use.

In embodiments, the slow cooking chamber may be configured to swivel to a side position away from the fire pit. Swivelling the slow cooking chamber to the side provides easy access for handling the food.

In embodiments, the slow cooking chamber may be connected to the arm via a first hinge for vertical adjustment, and the arm may be connected to the appliance via a second hinge for lateral movement of the slow cooking chamber. The two hinges work together to provide both vertical and lateral adjustability.

In embodiments, the adjustment of the slow cooking chamber relative to the fire pit may be continuous. Continuous adjustment allows for precise control over the cooking temperature.

In embodiments, the slow cooking chamber may include a handle for safe manipulation. The handle allows the user to safely move the slow cooking chamber when it is hot.

In embodiments, the barbecue appliance may be provided with an automated system for controlling the position of the slow cooking chamber. The appliance includes temperature sensors at least in the slow cooking chamber. The hinged arm is motorized. A processor is provided for automatically adjusting, by controlling movement of the motorized arm, the vertical and/or lateral position of the slow cooking chamber based on the desired cooking temperature set by the user and the measured temperature in the slow cooking chamber. This system maintains a constant, pre-set, temperature in the slow cooking chamber while allowing manual control of the grilling and/or griddling, ensuring optimal cooking conditions for both functions simultaneously.

In a second aspect, the present invention relates to a method of cooking food using a barbecue appliance, the barbecue appliance comprising a grilling and/or griddling section, a slow cooking chamber, and a fire pit for, in use, simultaneously supplying heat to both the grilling and/or griddling section and the slow cooking chamber. The method comprises simultaneously fast cooking food on the grilling and/or griddling section and slow cooking food in the slow cooking chamber, and adjusting the position of the slow cooking chamber relative to the fire pit to control its temperature.

In embodiments, the method may further comprise vertically adjusting the slow cooking chamber relative to the fire pit. Vertical adjustment allows for precise temperature control in the slow cooking chamber.

In embodiments, the method may further comprise moving the slow cooking chamber away from the fire pit to facilitate handling of the food. The method may comprise laterally moving the slow cooking chamber relative to the fire pit. Lateral movement, moving the slow cooking chamber away from the heat, allows for easy manipulation of the food in the slow cooking chamber.

In embodiments, the method may further comprise positioning the slow cooking chamber over the centre of the fire pit during cooking. Placing the slow cooking chamber at the centre of the fire pit ensures optimal heat transfer.

In embodiments, the position of the slow cooking chamber may be adjusted via an arm hingedly connected thereto. The hinged arm provides a convenient mechanism for adjusting the position of the slow cooking chamber with respect to the fire pit and/or the grilling and/or griddling section.

In embodiments, the slow cooking chamber may be thermally insulated to maintain a consistent cooking temperature. Insulation helps to maintain a steady temperature in the slow cooking chamber.

It is an advantage of embodiments of the present invention that both fast cooking functions, such as grilling and/or griddling, and slow cooking functions can be carried out simultaneously using a single heat source. It is an advantage of embodiments of the present invention that the temperature of the slow cooking chamber can be infinitely variably adjusted by raising or lowering it relative to the fire pit. It is an advantage of embodiments of the present invention that the slow cooking chamber can swivel to the side, allowing the chef to handle the food safely without exposure to excessive heat. It is an advantage of embodiments of the present invention that the slow cooking chamber is thermally insulated, providing a stable cooking environment and consistent cooking temperatures. It is an advantage of embodiments of the present invention that the slow cooking chamber is connected to an arm that allows both vertical adjustment and lateral movement for optimal positioning. It is an advantage of embodiments of the present invention that the fire pit is designed as a fire ring, enabling the slow cooking chamber to be positioned over its centre while the grilling and/or griddling section is arranged around it. It is an advantage of embodiments of the present invention that the slow cooking chamber's position can be continuously adjusted, allowing for precise temperature control. It is an advantage of embodiments of the present invention that the appliance facilitates efficient use of space and heat by utilizing a single heat source for multiple cooking methods. It is an advantage of embodiments of the present invention that the slow cooking chamber is removably mountable, offering flexibility in its use. It is an advantage of embodiments of the present invention that the arm connected to the slow cooking chamber is hingedly connected to other parts of the barbecue appliance, such as the grilling and/or griddling section or a frame, providing ease of movement and adjustment. It is an advantage of embodiments of the present invention that the grilling and/or griddling section comprises a grilling section with a grill grate and/or a griddling section with a griddle plate, enhancing the grilling and/or griddling experience. It is an advantage of embodiments of the present invention that the slow cooking chamber includes a heat-resistant handle for safe manipulation during cooking operations.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

The invention will now be described further, by way of example, with reference to the accompanying drawings, in which:
FIG. 1 is a 3D-view of a barbecue appliance in accordance with embodiments of the present invention, with a closed slow cooking chamber.
FIG. 2 is a 3D-view of a barbecue appliance in accordance with embodiments of the present invention, with the slow cooking chamber being opened.
FIG. 3 is a cross-sectional view of a barbecue appliance in accordance with embodiments of the present invention.
FIG. 4 is an angled cross-sectional view of a barbecue appliance in accordance with embodiments of the present invention.
FIG. 5 is a 3D-view of a barbecue appliance in accordance with embodiments of the present invention, where the slow cooking chamber is laterally offset from the fire pit.

In the different figures, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention. Any reference signs in the claims shall not be construed as limiting the scope.

The following terms are provided solely to aid in the understanding of the invention.

As used herein, and unless otherwise specified, the term "grilling and/or griddling section" refers to the portion of the barbecue appliance designed for fast cooking food. The term "grilling" refers to cooking food over an open flame or heat source using a grill gate, allowing direct heat to reach the food. The term "griddling" refers to cooking food on a flat, solid surface (e.g. a griddle or a plate), which transfers heat through conduction.

As used herein, and unless otherwise specified, the term "slow cooking chamber" refers to an enclosed compartment of the barbecue appliance configured for cooking food at lower temperatures over an extended period, wherein the temperature within the chamber is controlled by adjusting its position relative to the fire pit. Examples of the slow cooking chamber include thermally insulated containers or pots that can be moved closer to or further from the heat source. The slow cooking chamber may be thermally insulated, meaning that the device is designed to minimize heat loss to its surroundings by using materials or construction techniques that retain heat within the cooking chamber. This feature has several implications, such as consistent cooking temperatures (thermal insulation helps maintain a stable cooking environment), energy efficiency (the slow cooking chamber requires less energy to maintain a consistent cooking temperature because the insulation prevents heat from escaping), retained moisture (by keeping the heat inside, insulated devices often retain moisture better), safety (insulated devices are often cooler to the touch on the outside), and extended cooking and warming times (even after the fire pit is shut down, the insulation helps retain residual heat, allowing food to continue cooking gently or stay warm for longer).

As used herein, and unless otherwise specified, the term "fire pit" refers to the component of the barbecue appliance configured for containing the heat source - such as burning wood, charcoal, briquettes, pellets, a gas burner - and simultaneously supplies heat to both the grilling and/or griddling section and the slow cooking chamber. The fire pit may be in the form of a bowl, ring, or any structure that holds the combustible material.

As used herein, and unless otherwise specified, the term "fire ring" refers to a circular fire pit that defines a central opening where the heat source is located. The fire ring simultaneously provides heat to the grilling and/or griddling section arranged around it and to the slow cooking chamber positioned over the central opening.

As used herein, and unless otherwise specified, the term "central opening" refers to the space defined within the fire ring where the heat source is located. The slow cooking chamber can be positioned over this central opening to receive heat from the fire pit.

As used herein, and unless otherwise specified, the phrase "adjustable in position relative to the fire pit" refers to the capability of the slow cooking chamber to be moved vertically, laterally, or both with respect to the fire pit to control the amount of heat it receives. This adjustment allows for regulation of the cooking temperature within the slow cooking chamber. The lateral adjustment may furthermore allow for safer manipulation of the food in the slow cooking chamber.

As used herein, and unless otherwise specified, the phrase "arm hingedly connected to the slow cooking chamber" refers to a structural element that supports the slow cooking chamber and is connected via one or more hinges to another part of the barbecue appliance, such as the grilling and/or griddling section, or a frame, to allow movement. This includes arms that enable vertical lifting, lowering, and/or lateral swinging of the slow cooking chamber relative to the fire pit.

As used herein, and unless otherwise specified, the phrase "mechanism for infinitely variable adjustment" refers to a device or system that allows continuous, non-incremental adjustment of the slow cooking chamber's position relative to the fire pit. Examples include telescopic arms, sliding tracks, or screw mechanisms that enable fine control over the chamber's placement.

As used herein, and unless otherwise specified, the phrase "adjustment of the slow cooking chamber relative to the fire pit is continuous" refers to the ability to change the position of the slow cooking chamber smoothly and without fixed increments. This continuous adjustment enables precise control over the cooking temperature within the chamber.

As used herein, and unless otherwise specified, the term "telescopic" refers to a feature of the arm that allows it to extend or retract in length by sliding sections within one another. This telescopic function facilitates vertical adjustment of the slow cooking chamber.

As used herein, and unless otherwise specified, the phrase "rotatable about a vertical axis" refers to the ability of the arm to pivot horizontally around an axis that is perpendicular to a horizontal plane, e.g. the ground. This rotation allows for lateral movement of the slow cooking chamber relative to the fire pit.

As used herein, and unless otherwise specified, the term "thermally insulated" refers to the slow cooking chamber being constructed with materials or features that reduce heat loss, thereby maintaining a consistent internal cooking temperature. Examples include chambers with double-walled construction or insulation layers.

As used herein, and unless otherwise specified, the phrase "movable between a cooking position over the fire pit and a handling position laterally offset from the fire pit" refers to the capability of repositioning the slow cooking chamber from directly above the heat source to a location away from the heat for safe handling. This movement can be achieved through swinging, sliding, or rotating mechanisms.

As used herein, and unless otherwise specified, the phrase "configured to swivel to a side position away from the fire pit" refers to the design of the slow cooking chamber or its supporting arm that allows it to turn horizontally, moving the chamber away from the fire pit to facilitate access or handling.

As used herein, and unless otherwise specified, the terms "first hinge" and "second hinge" refer to two separate pivot points in the arm mechanism. The first hinge enables vertical adjustment of the slow cooking chamber, such as tilting or lifting, while the second hinge allows lateral movement, such as swinging the chamber toward or away from the fire pit.

As used herein, and unless otherwise specified, the phrase "removably mountable on the barbecue appliance" refers to the slow cooking chamber being attachable to and detachable from the barbecue appliance as needed. This allows for easy removal of the chamber for cleaning, storage, or alternative use.

As used herein, and unless otherwise specified, the phrase "grilling and/or griddling section is arranged around the fire pit" refers to the placement of the grilling and/or griddling area encircling the fire pit. This arrangement allows the grilling and/or griddling section to receive heat from the sides of the fire pit, providing even cooking surfaces.

As used herein, and unless otherwise specified, the term "grill grate" refers to the surface upon which food is placed for grilling, typically composed of metal bars or mesh that allow direct heat to pass through from the fire pit below.

As used herein, and unless otherwise specified, the term "griddle plate" refers to the solid surface upon which food is placed for baking or roasting, typically composed of a closed plate that is heated and transfers heat to the food on it through conduction.

As used herein, and unless otherwise specified, the term "handle for safe manipulation" refers to a feature attached to the slow cooking chamber designed for user contact. The handle allows for safe movement or adjustment of the chamber and is preferably constructed from heat-resistant materials to prevent injury.

As used herein, and unless otherwise specified, the phrase "single heat source" refers to the fire pit comprising one unified source of heat that simultaneously provides thermal energy to both the grilling section and the slow cooking chamber. This means there are no separate heat sources for different cooking areas within the appliance.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a barbecue appliance (1) comprising a grilling and/or griddling section (2), a slow cooking chamber (3), and a fire pit (4) which, in use, simultaneously supplies heat to both the grilling and/or griddling section (2) and the slow cooking chamber (3). The slow cooking chamber (3) is adjustable in position relative to the fire pit (4) to control its temperature.

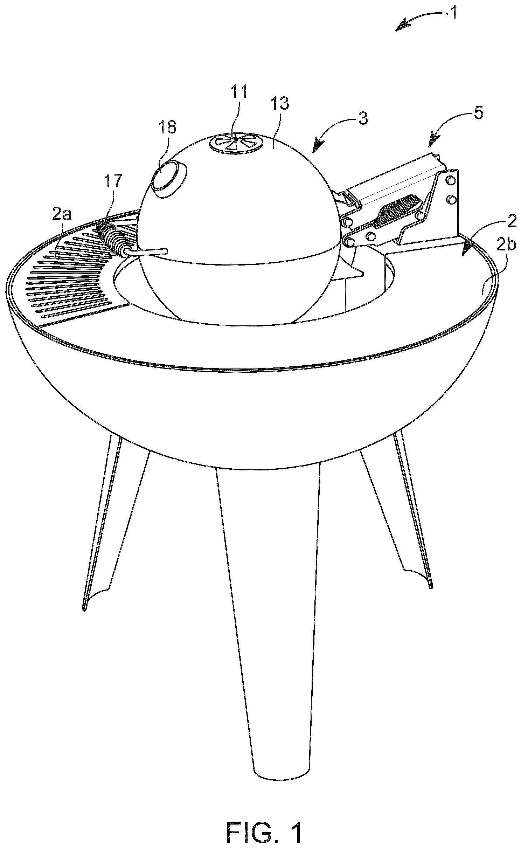

As illustrated in **FIG. 1****,** which shows a 3D view of a barbecue appliance (1) according to embodiments of the present invention, the barbecue appliance (1) comprises a grilling and/or griddling section (2) arranged around the fire pit (4) and a slow cooking chamber (3). The grilling and/or griddling section (2) is a part for fast cooking, where food is prepared, such as grilled or baked, quickly with high heat, as opposed to the slow cooking chamber (3) where food is prepared at lower temperature during a longer time period. The slow cooking chamber (3) may for instance be a kamado type of barbecue. In the embodiment illustrated, the grilling and/or griddling section (2) comprises a grilling section (2a) comprising a grill for grilling food, and a griddling section (2b) comprising a baking plate for baking or roasting food. The presence of both a grilling section (2a) and a griddling section (2b), however, is not limiting for the present invention. In alternative embodiments, a barbecue appliance (1) can comprise either one of a grilling section (2a) or a griddling section (2b).

In the barbecue appliance (1) in accordance with embodiments of the present invention, a fire pit (4) is provided for, during cooking of the food, simultaneously supplying heat to both the grilling and/or griddling section (2) and the slow cooking chamber (3).

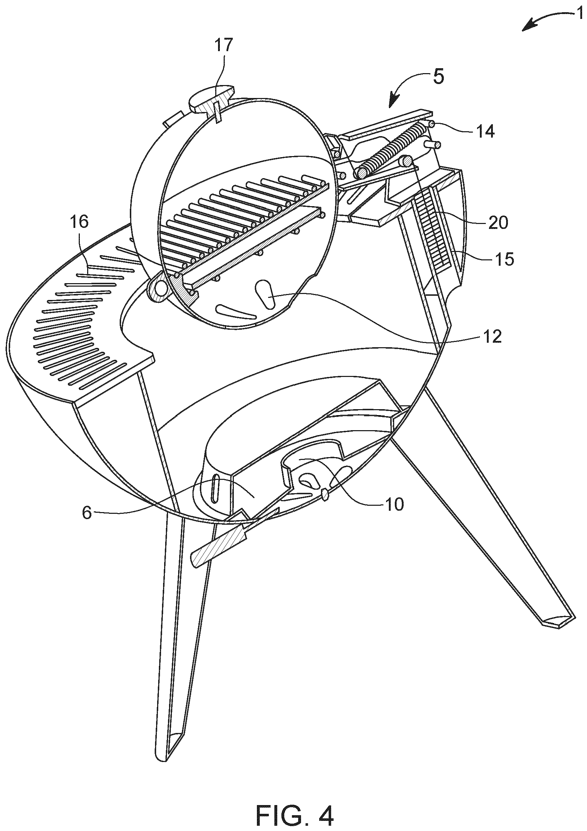

In the drawings provided, the fire pit (4) is depicted as a fire ring (6) defining a central opening (10), as illustrated in FIG. 4. In alternative embodiments, not illustrated, the fire pit could be an elongated fire pit.

The grilling and/or griddling section (2) comprises a grill grate (16) on the grilling section (2a), and/or a griddle on the griddling section (2b). The grill grate (16) and the griddle are standard components for grilling and griddling food, respectively.

In FIG. 1, the slow cooking chamber (3) is shown in a closed position and includes a handle (17) for safe manipulation, allowing the user to safely both move the slow cooking chamber (3) when it is hot, and open the cover (13) of the slow cooking chamber (3).

The slow cooking chamber (3) may further comprise a measuring device (18) for measuring environmental conditions at the inside of the slow cooking chamber (3) without having to open the cover (13) thereof. The measuring device (18) may for instance be a thermometer for reading the temperature, a hygrometer for measuring the humidity level, or a thermohygrometer where both functions are combined in a single device.

The slow cooking chamber (3) may comprise first ventilation holes (11) at the top of the cover (13), and/or second ventilation holes (12) at the bottom of the chamber. The first ventilation holes (11) and second ventilation holes (12) may be provided with opening and closing means. Opening or closing the ventilation holes, potentially partially, may aid in reaching a desired environment, including temperature and humidity, inside the slow cooking chamber (3).

An arm (5) hingedly connects the slow cooking chamber (3) to the grilling and/or griddling section (2), allowing for vertical adjustment and/or lateral movement of the slow cooking chamber (3) relative to the fire pit (4). The hinged connection may be a direct connection between the slow cooking chamber (3) and the grilling and/or griddling section (2). Alternatively, the hinged connection may be an indirect connection between the slow cooking chamber (3) and the grilling and/or griddling section (2), e.g. a connection which connects the slow cooking chamber (3) to a frame in a fixed position relative to the grilling and/or griddling section (2).

The hinged arm (5) may be positioned eccentrically relative to the centre of the fire pit (4), as illustrated in FIG. 1 to FIG. 5. Alternatively (not illustrated in the drawings), the arm could be mounted on a central pivot point, allowing the slow cooking chamber to rotate 360 degrees around the fire pit. Such design enables the user to position the slow cooking chamber at any point above the fire pit, providing even more precise temperature control, especially in case the fire ring does not provide an even temperature at all locations. The arm may also include a telescopic mechanism for vertical adjustment. During use, the slow cooking chamber can be rotated to different positions around the fire pit to take advantage of varying heat intensities, while simultaneously using the grilling and/or griddling for traditional grilling and/or griddling.

The hinged arm (5) provides a convenient mechanism for adjusting the position of the slow cooking chamber (3), in vertical and/or horizontal direction, preferably in both directions. The vertical adjustment allows to change the height distance between the slow cooking chamber (3) and the fire pit (4). In embodiments, the arm (5) is telescopic to allow vertical adjustment of the slow cooking chamber (3). This vertical adjustment allows for precise temperature control of the slow cooking chamber (3). The lateral adjustment allows to move the slow cooking chamber (3) away from the fire pit (4). For this, the arm (5) may be rotatable about a vertical axis (15) to allow lateral movement of the slow cooking chamber (3), facilitating handling of the food in the slow cooking chamber (3).

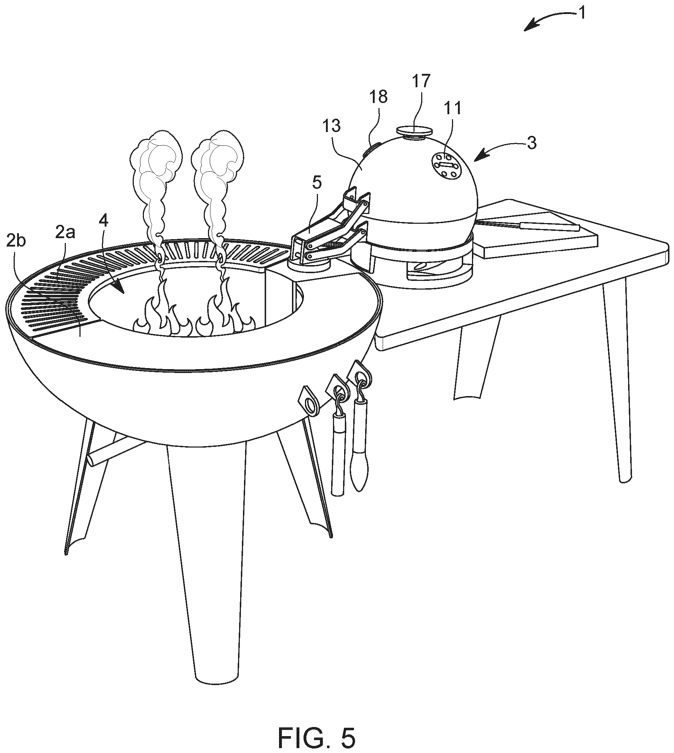

In particular embodiments, the arm (5) may allow the slow cooking chamber (3) to be moved between a cooking position over the fire pit (4) and a handling position laterally offset from the fire pit (4), as illustrated in **FIG. 5****.** The lateral movement enables the slow cooking chamber (3) to swivel to a side position away from the fire pit (4) for convenient handling of the food. The handling position allows for convenient manipulation of the food without being directly over the heat source. In the embodiment illustrated, the slow cooking chamber (3) is rotated towards a position above a table, and the table is provided with a support for accepting and supporting the slow cooking chamber (3), but none of these are limiting for the present invention. Furthermore, in the embodiment illustrated in FIG. 5, the barbecue appliance is provided with hooks for attaching utensils such as tongs, a spatula, a basting brush, a grill fork, heat resistant gloves, and similar.

Additionally, the slow cooking chamber (3) may be removably mountable on the barbecue appliance (1), enabling it to be easily cleaned or stored when not in use. Such feature allows to use interchangeable slow cooking chambers, potentially with different characteristics, that can be attached to the hinged arm. These chambers can for instance include a traditional slow cooking chamber, and a smoker box. Each chamber can be easily swapped and positioned relative to the fire pit using the adjustable arm. This design allows for various cooking methods while maintaining the dual-function capability of simultaneous grilling and specialized cooking.

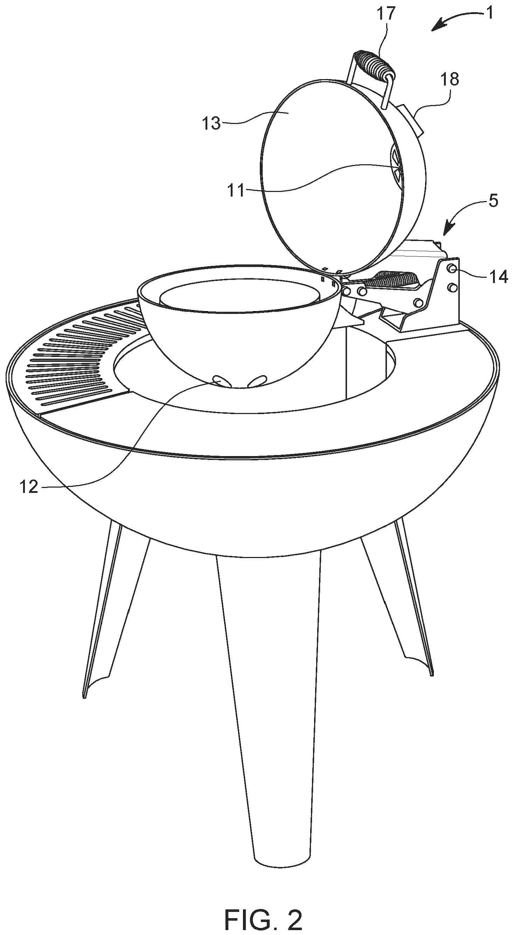

In **FIG. 2****,** the slow cooking chamber (3) is illustrated in a higher vertical position than it is illustrated in FIG. 1, illustrating the slow cooking chamber's (3) adjustability in position relative to the fire pit (4) to control its temperature. FIG. 2 shows a 3D view of the barbecue appliance (1) with the slow cooking chamber (3) in an opened position, hence with the cover 13 being opened such that the user has access to the inside of the slow cooking chamber (3), for instance for preparing or manipulating food.

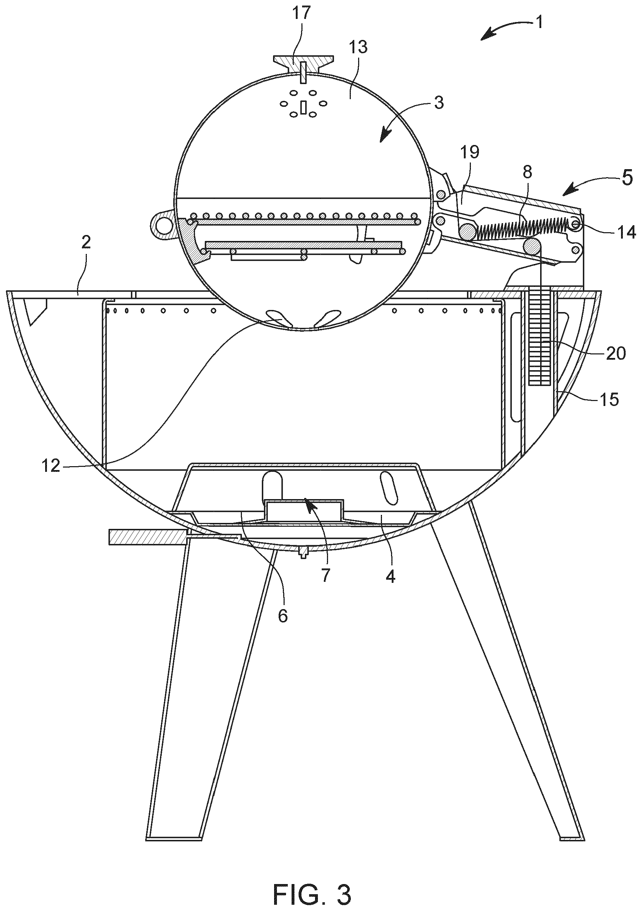

Referring to **FIG. 3**, which shows a cross-sectional view of the barbecue appliance (1), the slow cooking chamber (3) is positionable above the centre (7) of the fire pit (4) when in use. Placing the slow cooking chamber (3) at the centre of the fire pit (4) ensures optimal heat transfer. The slow cooking chamber (3) is preferably thermally insulated to maintain a consistent cooking temperature, with insulation helping to maintain a steady temperature within the chamber. A mechanism (8) is provided for infinitely variable adjustment of the slow cooking chamber's (3) position relative to the fire pit (4). This mechanism (8) may be supported by a spring. Such continuous adjustment allows for fine-tuning and precise control over the cooking temperature.

In the embodiment illustrated in FIG. 3, a wire and spring mechanism (19, 20) is provided to facilitate opening of the cover (13). In this embodiment, a handle (17) is located at the top of the cover (13). When the user pulls the handle (17) to open the cover (13), the force on a compressed spring (20) is reduced via a wire (19). The spring expands and tries to go to its original, uncompressed length, thus aiding in lifting the weight of the cover (13), making it easier for the user to open the cover (13). When closing the cover (13), the spring (20) is compressed again, by means of transmission of motion via the wire (19). The more the spring (20) is compressed, the more it counteracts the closing movement of the cover (13), thus facilitating closing of the cover (13) while avoiding a fierce closing thereof. This wire and spring mechanism (19, 20) is only one way to implement means for facilitating opening the cover, and is in no way intended to be limiting for the present invention.

As shown in **FIG. 4**, which provides an angled cross-sectional view of the barbecue appliance (1), the slow cooking chamber (3) is connected to the arm (5) via a first hinge (14) for vertical adjustment. The arm (5) is connected to the appliance (1) via a second hinge (15), for instance a vertical axis, for lateral movement of the slow cooking chamber (3). The two hinges (14, 15) work together to provide both vertical and lateral adjustability, enabling both temperature control and easy access to the food. The adjustment of the slow cooking chamber (3) relative to the fire pit (4) is continuous, allowing for precise temperature control. The fire pit (4) comprises a single heat source, specifically a fire ring (6), for simultaneously supplying heat to both the grilling and/or griddling (2) and the slow cooking chamber (3). A fire ring (6) provides even heat distribution, contributing to the efficiency of the barbecue appliance.

In embodiments, the grilling and/or griddling section (2) may be arranged around the fire pit (4), at a distance thereof, as depicted in FIG. 3 and FIG. 4. This configuration provides a compact and efficient barbecue appliance, maximizing the use of space and heat distribution. The inclusion of a grill grate (16) in the grilling and/or griddling section (2) allows for standard grilling practices.

In a second aspect, the present invention relates to a method of cooking food using the barbecue appliance (1) described above. The method comprises cooking food simultaneously on the grilling and/or griddling section (2) and in the slow cooking chamber (3), and adjusting the position of the slow cooking chamber (3) relative to the fire pit (4) to control its temperature.

In embodiments, the method may comprise vertically adjusting the slow cooking chamber (3) relative to the fire pit (4). As achieved through the telescopic arm (5) shown in FIG. 1 to FIG. 4, vertical adjustment allows for precise temperature control by varying the proximity of the slow cooking chamber (3) to the heat source. The method may also involve laterally moving the slow cooking chamber (3) relative to the fire pit (4), as facilitated by the arm (5) rotating about a vertical axis (15). This lateral movement, illustrated e.g. in FIG. 5, facilitates handling of the food by moving the slow cooking chamber (3) away from the direct heat, and allows for safe and convenient manipulation of the food without exposure to excessive heat.

The method may further comprise positioning the slow cooking chamber (3) over the centre of the fire pit (4) during cooking, as shown in FIG. 3. Placing the slow cooking chamber (3) at the centre ensures optimal heat transfer for effective slow cooking.

In embodiments, the position of the slow cooking chamber (3) is adjusted via an arm (5) hingedly connected thereto. The hinged arm (5) provides a convenient mechanism for adjusting the position of the slow cooking chamber (3) both vertically and laterally. The connections via the first hinge (14) and second hinge (15), as shown in FIG. 3, enable seamless movement and positioning of the slow cooking chamber (3).

In embodiments, the slow cooking chamber (3) may be thermally insulated to maintain a consistent cooking temperature, which is critical for effective slow cooking over extended periods.

Overall, the barbecue appliance (1) of embodiments of the present invention, as illustrated in FIG. 1 through FIG. 5, offers a compact and efficient solution for simultaneously grilling and/or baking or roasting and slow cooking food. The innovative design of the slow cooking chamber (3), adjustable both vertically and laterally via the arm (5), allows for precise temperature control and easy handling of food. The integration of the grilling and/or griddling section (2) around a centrally located fire pit (4) maximizes space and heat distribution. The thermally insulated slow cooking chamber (3) ensures consistent cooking temperatures, making the appliance versatile and effective for various cooking methods.

It is to be understood that although preferred embodiments, specific constructions and configurations, as well as materials, have been discussed herein for devices according to the present invention, various changes or modifications in form and detail may be made without departing from the scope of this invention.

## Claims

1. A barbecue appliance comprising:
- a grilling and/or griddling section;
- a slow cooking chamber;
- a fire pit for, in use, simultaneously supplying heat to both the grilling and/or griddling section and the slow cooking chamber;
wherein the slow cooking chamber is adjustable in position relative to the fire pit to control its temperature.

2. The barbecue appliance according to claim 1, wherein the slow cooking chamber adjustable relative to the fire pit by means of a vertical movement.

3. The barbecue appliance according to any one of the preceding claims, further comprising a mechanism for infinitely variable adjustment of the slow cooking chamber's position relative to the fire pit.

4. The barbecue appliance according to any one of the preceding claims, wherein the slow cooking chamber is laterally movable relative to the fire pit.

5. The barbecue appliance according to any one of the preceding claims, wherein the slow cooking chamber is positionable above the centre of the fire pit when in use.

6. The barbecue appliance according to any one of the preceding claims, furthermore comprising an arm hingedly connecting the slow cooking chamber to the grilling and/or griddling section.

7. The barbecue appliance according to claim 6, wherein the arm is configured to allow vertical adjustment and lateral movement of the slow cooking chamber.

8. The barbecue appliance according to any one of the preceding claims, wherein the fire pit is a fire ring.

9. The barbecue appliance according to any one of the preceding claims, wherein the grilling and/or griddling section is a fire ring barbecue.

10. The barbecue appliance according to any one of the preceding claims, wherein the slow cooking chamber is thermally insulated.

11. A method of cooking food, including using a barbecue apparatus, the barbecue apparatus comprising:
- a grilling and/or griddling section;
- a slow cooking chamber;
- a fire pit for, in use, simultaneously supplying heat to both the grilling and/or griddling section and the slow cooking chamber;
the method comprising:
- cooking food simultaneously on the grilling and/or griddling section and in the slow cooking chamber; and
- adjusting the position of the slow cooking chamber relative to the fire pit to control its temperature.

12. The method according to claim 11, further comprising vertically adjusting the slow cooking chamber relative to the fire pit.

13. The method according to any one of claims 11 or 12, further comprising laterally moving the slow cooking chamber relative to the fire pit.

14. The method according to any one of claims 11 to 13, further comprising positioning the slow cooking chamber above the centre of the fire pit during cooking.
